# FASCICULE DE BREVET EUROPEEN

(11) **EP 4 220 206 B1**
(45) Date de publication et mention de la délivrance du brevet: **04.02.2026**
(21) Numéro de dépôt: 23167221.3
(22) Date de dépôt: 19.12.2017
(51) Int. Cl.: G01R 31/319, G06F 11/26, G06F 21/82, G06F 13/40, G06F 8/60, G06F 8/65, G06F 13/00

(54) **DISPOSITIF DE CHARGEMENT DE DONNÉES DANS DES UNITÉS INFORMATIQUES DE TRAITEMENT DEPUIS UNE SOURCE DE DONNÉES**
VORRICHTUNG ZUM LADEN VON DATEN IN DATENVERARBEITUNGSEINHEITEN VON EINER DATENQUELLE
DEVICE FOR LOADING DATA INTO COMPUTER PROCESSING UNITS FROM A DATA SOURCE

(30) Priorité: 19.12.2016 FR 1662796
(43) Date de publication de la demande: 02.08.2023
(62) Demande divisionnaire de: 17826496.6
(73) Titulaire: Safran Electronics & Defense, 75015 Paris (FR)
(72) Inventeur: REGACHE, Pascal, 77550 Moissy-Cramayel (FR); ELIE, Philippe, 77550 Moissy-Cramayel (FR)
(74) Mandataire: Cabinet Boettcher

(56) Documents cités:
- US-A1- 2008 263 232
- US-A1- 2014 321 477

## Description

La présente invention concerne le chargement de données dans des unités informatiques.

### ETAT DE LA TECHNIQUE

Une telle unité informatique comprend au moins une mémoire et un processeur pour traiter des données de manière à former, par exemple, un calculateur.

Les données sont chargées dans les unités informatiques par exemple pour mettre à jour les programmes contenus dans les unités informatiques ou mettre à jour les données utilisées par les unités informatiques pour la réalisation des traitements qui leur sont confiés.

Les données de mise à jour sont généralement contenues dans une source de données usuellement formée d'un ordinateur exécutant un logiciel de chargement de données. La source de données peut également être un support mémoire portable comme une carte mémoire.

Lorsque les unités informatiques sont peu nombreuses, il est possible de raccorder la source de données directement à chaque unité.

Ceci est toutefois difficilement réalisable lorsque les unités sont peu accessibles. Il est alors connu de raccorder les unités informatiques à un dispositif unique, comme un commutateur ou un concentrateur, auquel la source de données pourra être raccordée depuis un endroit plus facilement accessible.

Par ailleurs, dans certaines applications sensibles, il est nécessaire de pouvoir mettre à jour des unités informatiques tout en s'assurant que chacune des unités informatiques va recevoir les données qui lui sont destinées et uniquement celles-ci. Il convient dès lors d'interdire aux unités informatiques de communiquer entre elles pour éviter que des informations puissent transiter entre elles. Ces contraintes s'appliquent notamment au domaine aéronautique : la norme ARINC615A définit ainsi les caractéristiques que doivent respecter les systèmes de chargement des données de mise à jour dans les calculateurs d'aéronef.

Il est relativement compliqué de respecter ces contraintes lorsque les unités informatiques sont reliées à un réseau fonctionnant selon le protocole de communication Ethernet. Il est rappelé que, selon le modèle OSI (de l'anglais « open system interconnection »), pour transmettre des données d'une unité informatique à une autre, il est nécessaire d'appliquer sur les données une succession de transformations, assimilées à des « couches », de plus haut niveau (couche « application ») vers le plus bas niveau (couche « physique » ou « PHY ») à l'émission des données et en sens inverse à la réception des données. La transmission de données par le protocole Ethernet suppose donc de parvenir à l'adresse MAC à la réception des données, c'est-à-dire de décoder les trames de données pour revenir successivement à la couche PHY puis à la couche « liaison de données » (ou « Data Link ») dans laquelle a été encapsulée l'adresse MAC. Ainsi, un commutateur (ou switch) Ethernet inspecte les paquets de données transitant par lui pour lire l'adresse MAC du destinataire de sorte qu'un fraudeur qui aurait accès à une unité informatique du réseau et qui connaîtrait l'adresse MAC d'une autre des unités informatiques du réseau pourrait envoyer des messages directement à cette dernière unité. La seule solution connue réside dans la mise en place d'un protocole ou dispositif particulier qui interdirait à certaines des unités informatiques de communiquer entre elles, néanmoins l'existence d'une liaison physique permanente entre les unités informatiques laisse subsister un risque de contournement du protocole.

Le document US-A-2009/303883 décrit un procédé de routage de données mettant en œuvre un protocole Ethernet et utilisant les adresses MAC pour router les données.

Le document US-A-2014/321477 décrit un dispositif de raccordement sélectif d'au moins un premier équipement informatique à une pluralité de deuxièmes équipements informatiques.

### OBJET DE L'INVENTION

Un but de l'invention est de fiabiliser le transfert des données.

### RESUME DE L'INVENTION

Selon l'invention, on prévoit un procédé de chargement de données au moyen d'un dispositif de chargement de données selon la revendication 1.

La source de données serait alors raccordée au premier connecteur et les unités informatiques aux deuxièmes connecteurs. L'association de chaque connecteur à un composant PHY permet d'identifier ce connecteur, et donc l'unité informatique qui lui est reliée, au moyen de l'identifiant qui est affecté à chaque composant PHY. L'unité locale de commande permet de sélectionner le deuxième connecteur, et donc l'unité informatique, à raccorder au premier connecteur, et donc à la source de données. Ainsi, le dispositif de chargement de données n'a pas à connaître l'adresse MAC du destinataire, la sélection du destinataire pouvant se faire à partir de l'identification des composants PHY de chaque connecteur. Il n'est donc pas nécessaire de décoder les données puis de les recoder pour les router : les données sont recopiées telles quelles d'un composant PHY à l'autre. Les composants PHY permettent donc de relier chacune des unités informatiques raccordées aux deuxièmes connecteurs à la source de données raccordée au premier connecteur et, en combinaison avec les modules de sélection, empêchent toute liaison directe entre les unités informatiques. En effet, en se raccordant à l'un des deuxièmes connecteurs, il est impossible d'accéder à une unité informatique qui serait raccordée à un autre des deuxièmes connecteurs puisqu'il n'y a pas de liaison physique entre elles.

Le dispositif comprend un châssis sur lequel sont montés les modules de sélection, le premier connecteur, et les deuxièmes connecteurs ; l'unité de commande comprenant une unité locale de commande et une unité de commande déportée reliée par un câble à l'unité locale de commande et pourvue d'une interface homme-machine.

Avantageusement alors :
- l'unité de commande déportée comprend un boîtier pourvu d'un connecteur externe relié directement au premier connecteur du dispositif de chargement pour relier la source de données au premier connecteur via le connecteur externe de l'unité de commande déportée ;
- l'unité déportée de commande comprend une mémoire dans laquelle est stockée une table mettant en relation chaque deuxième connecteur avec au moins une caractéristique d'une unité informatique reliée au deuxième connecteur ; et, de préférence, la caractéristique est une vitesse de transfert de données et la table est chargée dans une mémoire de l'unité locale de commande qui est agencée pour commander, lors de l'établissement d'une voie montante et d'une voie descendante avec un des deuxièmes connecteurs, au composant PHY de ce deuxième connecteur de fonctionner à la vitesse de transfert mémorisée ou à une vitesse auto-négociée ;
- l'unité de commande déportée et l'unité locale de commande sont programmées pour former respectivement une unité maître et une unité esclave ;
- l'unité de commande déportée et l'unité locale de commande sont programmées pour communiquer entre elles au moyen des protocoles IP et UDP, l'unité de commande déportée et l'unité locale de commande ayant des adresses IP et MAC statiques ;
- l'unité de commande déportée est agencée pour couper une alimentation en énergie de l'unité locale de commande dans au moins une condition particulière ;
- l'unité de commande déportée et l'unité locale de commande sont agencées de telle manière que l'unité locale de commande ne puisse être alimentée en énergie lorsque l'unité de commande déportée n'est pas alimentée.

Selon d'autres caractéristiques particulières, éventuellement combinées avec les précédentes et/ou entre elles :
- l'unité locale de commande est agencée pour mettre dans un état inactif les composants PHY des deuxièmes connecteurs non reliés au premier connecteur et pour ne pouvoir mettre dans un état actif que celui des deuxièmes connecteurs qui est relié au premier connecteur ;
- les modules de sélection sont formés sur un circuit FPGA dans lequel sont définis des bus compatibles avec le standard RMII pour relier les modules de sélection au premier connecteur ;
- le dispositif comprend un module de test des liaisons entre le premier connecteur et les deuxièmes connecteurs ; et le module de test comprend avantageusement : un multiplexeur ayant une sortie reliée à une entrée du premier module de sélection, une première entrée reliée au premier connecteur et une deuxième entrée reliée à un générateur de signal ; un démultiplexeur ayant une entrée reliée à une sortie du deuxième organe de sélection, une première sortie reliée à un analyseur de signal et une deuxième sortie reliée à une première entrée d'un multiplexeur ayant une deuxième entrée reliée au générateur de signal et une sortie reliée au premier connecteur (de manière à ne pas créer de chemin de données entre les voies montante et descendante), le premier connecteur étant en outre relié par sa voie descendante à l'analyseur de signal ;
- une fonction supplémentaire indépendante de sécurité peut être mise en œuvre pour forcer la non alimentation des composants PHY des deuxièmes connecteurs si deux composants PHY des deuxièmes connecteurs sont détectés actifs simultanément. L'unité de commande peut également être agencée pour émettre une alerte si elle détecte que deux composants PHY des deuxièmes connecteurs sont simultanément activés.

D'autres caractéristiques et avantages de l'invention ressortiront à la lecture de la description qui suit d'un mode de réalisation particulier non limitatif de l'invention.

### RESUME DES FIGURES

Il sera fait référence aux dessins annexés, parmi lesquels :
- la figure 1 est un schéma représentant un dispositif selon l'invention raccordé à une source de données et à des unités informatiques ;
- la figure 2 est un schéma analogue à celui de la figure 1, montrant les flux de données dans un mode de fonctionnement nominal ;
- la figure 3 est un schéma analogue à celui de la figure 1, montrant les flux de données dans un mode de test ;
- la figure 4 est un schéma d'une variante de réalisation de l'unité de commande déportée ;
- la figure 5 est un schéma représentant un dispositif permettant d'éviter que plusieurs composants PHY des deuxièmes connecteurs soient dans leur état d'activation simultanément.

### EXPOSE DETAILLE DE L'INVENTION

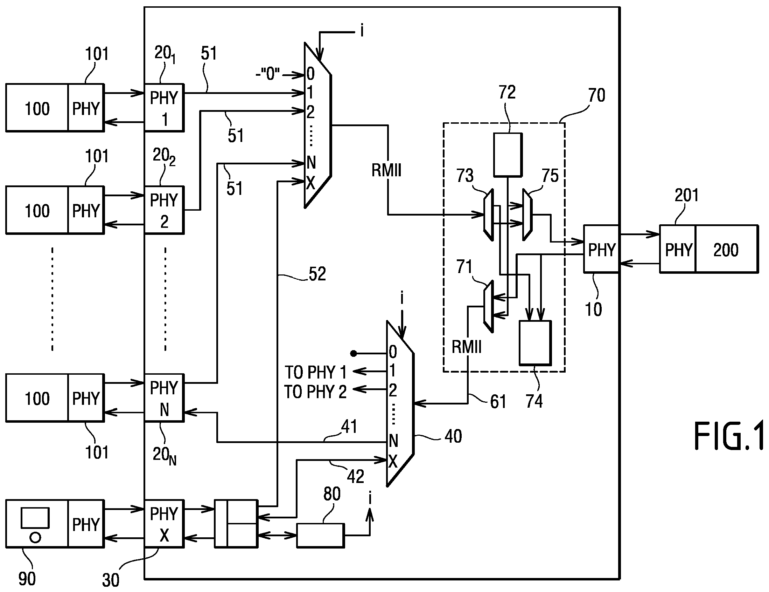

En référence aux figures 1 à 3, le dispositif de chargement de données selon l'invention est ici décrit en relation avec la mise à jour d'unités informatiques 100 d'un aéronef, et plus particulièrement ici un avion de ligne. Les unités informatiques 100 comprennent notamment des calculateurs impliqués dans le fonctionnement de l'aéronef, par exemple des calculateurs de vol et de navigation, et des unités informatiques dédiées au divertissement des passagers de l'aéronef, et par exemple des serveurs de vidéos à la demande. Les données de mise à jour comprennent par exemple une nouvelle version d'un programme, un « patch » correcteur, des valeurs réactualisées de paramètres... Les unités informatiques 100 sont au nombre de N (seules trois étant visibles sur les figures) et sont notées 100ᵢ pour les distinguer les unes des autres avec i variant de 1 à N.

Chaque unité informatique 100ᵢ comprend de façon classique au moins une mémoire et un processeur pour exécuter un programme contenu dans la mémoire en vue de traiter des données stockées dans la mémoire et/ou des données provenant d'organes, comme des capteurs, reliés à l'unité informatique. Chaque unité informatique 100ᵢ comprend de façon connue en elle-même un connecteur 101 pourvu d'un composant PHY. On rappelle que le composant PHY est une cellule de conversion analogique-numérique constituant la couche physique du modèle OSI.

Les données de mise à jour des unités informatiques 100ᵢ sont stockées dans une source de données ici formée par une unité informatique 200 qui comprend de façon classique au moins une mémoire contenant les données de mise à jour, et un processeur pour exécuter un programme de chargement de données contenu dans la mémoire en vue de permettre le chargement des données de mise à jour dans les unités informatiques 100ᵢ à qui lesdites données de mise à jour sont destinées. L'unité informatique 200 comprend de façon connue en elle-même un connecteur pourvu d'un composant 201 PHY. Les fonctions de l'unité informatique 200 sont assimilables à celles du PSL des systèmes de mise à jour traditionnel des calculateurs d'aéronefs.

Les unités informatiques 100ᵢ sont reliées à l'unité informatique 200 par l'intermédiaire d'un dispositif de chargement de données selon l'invention. Les fonctions du dispositif de chargement de données sont assimilables à celles du DLRB des systèmes de mise à jour traditionnel des calculateurs d'aéronefs.

Ce dispositif de chargement, généralement désigné en 1, comprend :
- un premier connecteur 10 pourvu d'un composant PHY,
- une pluralité de deuxièmes connecteurs 20ᵢ, avec i variant de 1 à N, pourvus chacun d'un composant PHY ;
- un troisième connecteur 30 pourvu d'un composant PHY ;
- un premier module 40 de sélection d'une voie descendante entre le premier connecteur 10 et l'un des deuxièmes connecteurs 20ᵢ ;
- un deuxième module 50 de sélection d'une voie montante entre le premier connecteur 10 et l'un des deuxièmes connecteurs 20ᵢ.

Le module de sélection 40 a une entrée reliée à un premier bus RMII 61 et N+2 sorties notées de 0 à N et X. Les sorties 1 à N sont reliées chacune au composant PHY de l'un des deuxièmes connecteurs 20ᵢ par une ligne 41 ; la sortie 0 n'est pas connectée ; et la sortie X est reliée au composant PHY du troisième connecteur 30 par une ligne 42.

Le module de sélection 50 a une sortie reliée à un deuxième bus RMII 62 et N+2 entrées notées de 0 à N et X. Les entrées 1 à N sont reliées chacune au composant PHY de l'un des deuxièmes connecteurs 20ᵢ par une ligne 51 ; l'entrée 0 n'est pas connectée ; et l'entrée X est reliée au composant PHY du troisième connecteur 30 par une ligne 52.

Le module de sélection 40 est agencé pour définir une voie descendante unique de manière à transmettre des données depuis le premier connecteur 10 vers chacun des deuxièmes connecteurs 20ᵢ alternativement, et le module de sélection 50 est agencé pour définir une voie montante unique de manière à transmettre des données en sens inverse. Les modules de sélection 40, 50 sont agencés pour ne pouvoir relier simultanément au premier connecteur 10 qu'un seul des deuxièmes connecteurs 20ᵢ.

Les lignes 41 sont distinctes des lignes 51 ; et la ligne 42 est distincte de la ligne 52.

Les bus RMII 61 et 62 sont distincts l'un de l'autre et sont reliés à un module de test généralement désigné en 70. Plus précisément, le premier bus RMII 61 est relié à la sortie d'un multiplexeur 71 ayant une première entrée reliée au premier connecteur 10 et une deuxième entrée reliée à un générateur de signal 72. Le deuxième bus RMII 62 est relié à une entrée d'un démultiplexeur 73 ayant une première sortie reliée à un analyseur de signal 74 et une deuxième sortie reliée à une première entrée d'un multiplexeur 75 ayant une deuxième entrée reliée au générateur de signal 72 et une sortie reliée au premier connecteur 10. Le premier connecteur 10 est en outre relié par sa voie descendante à l'analyseur de signal 74.

Les modules de sélection 40, 50 et les bus RMII 61, 62 sont formés sur un circuit FPGA.

Les modules de sélection 40, 50 ont une entrée de commande reliée à une sortie de commande d'une unité locale de commande 80 agencée pour commander les modules de sélection 40, 50 en vue de sélectionner le deuxième connecteur 20ᵢ à relier au premier connecteur 10.

A cette fin, l'unité locale de commande 80 comprend de façon classique au moins une mémoire et un processeur pour exécuter un programme contenu dans la mémoire et agencé pour :
- commander les modules de sélection 40, 50 en vue de sélectionner le deuxième connecteur 20ᵢ à relier au premier connecteur 10 ;
- mettre dans un état inactif les composants PHY des deuxièmes connecteurs 20ᵢ non reliés au premier connecteur 10 ;
- ne pouvoir mettre dans un état actif que celui des deuxièmes connecteurs 20ᵢ qui est relié au premier connecteur 10 ;
- réaliser une procédure de test au démarrage de l'unité locale de commande 80.

Les modules de sélection 40, 50 ; les bus 61, 62 ; le module de test 70 ; le premier connecteur 10 ; les deuxièmes connecteurs 20ᵢ ; le troisième connecteur 30 et l'unité locale de commande sont ici montés sur un châssis commun.

Le dispositif comprend en outre une unité de commande déportée 90 qui comprend de façon classique au moins une mémoire et un processeur pour exécuter un programme contenu dans la mémoire en vue de permettre à un opérateur de choisir les unités informatiques 100ᵢ qu'il veut mettre à jour. La mémoire contient une table mettant en relation un identifiant et une vitesse de transfert de l'unité informatique 100ᵢ avec le deuxième connecteur 20ᵢ auquel l'unité informatique 100ᵢ est reliée. L'unité de commande déportée 90 est pourvue d'une interface homme-machine, ici un écran 91 et un bouton 92 de sélection d'options affichées sur l'écran 91. Les fonctions de l'unité de commande déportée 90 sont assimilables à celles du DSLU des systèmes de mise à jour traditionnels des calculateurs d'aéronefs.

L'unité de commande déportée 90 est reliée par un câble au troisième connecteur 30 et donc à l'unité locale de commande 80. L'unité de commande déportée 90 et l'unité locale de commande 80 sont programmées pour communiquer entre elles au moyen des protocoles IP et UDP, l'unité de commande déportée 90 et l'unité locale de commande 80 ayant des adresses IP et MAC statiques. L'unité de commande déportée 90 et l'unité locale de commande 80 sont programmées pour former respectivement une unité maître et une unité esclave.

Le programme exécuté par l'unité de commande déportée 90 est agencé pour :
- à la mise sous tension de l'unité de commande déportée 90, détecter si l'aéronef est en vol ou en stationnement au sol et, dans le deuxième cas, autoriser l'alimentation de l'unité locale de commande 80 ;
- lorsque l'unité locale de commande 80 est alimentée, charger la table dans la mémoire de l'unité locale de commande ;
- afficher sur l'écran 91 un menu permettant à l'opérateur de sélectionner les unités informatiques à mettre à jour et lancer un test du dispositif de chargement ;
- couper l'alimentation en énergie de l'unité locale de commande 80 dans au moins une condition particulière, ici lorsque l'aéronef se met en mouvement, et plus généralement interdire l'alimentation en énergie de l'unité locale de commande 80 tant que l'aéronef n'est pas à l'arrêt.

On notera que l'unité de commande déportée et l'unité locale de commande sont agencées de telle manière que l'unité locale de commande ne puisse être alimentée en énergie lorsque l'unité de commande déportée n'est pas alimentée.

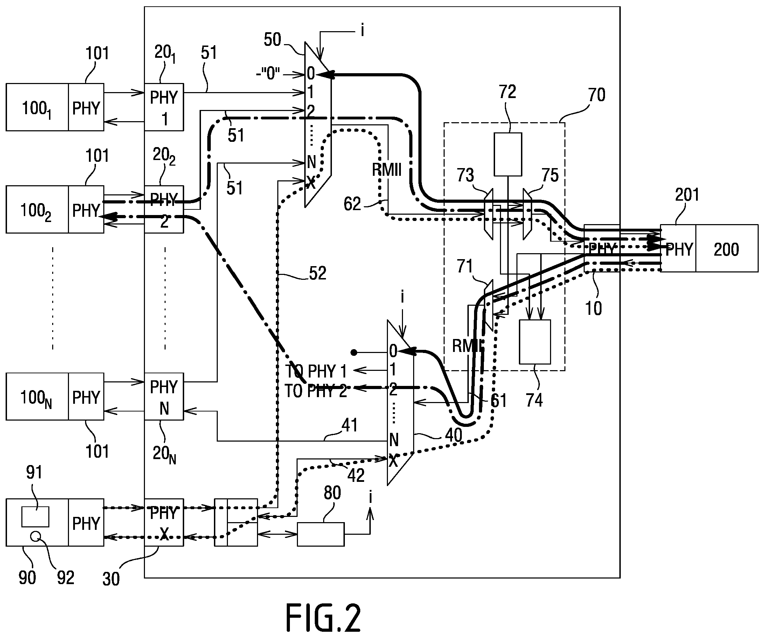

Une opération de chargement de données dans l'unité informatique 100₂ va maintenant être décrite en relation avec la figure 2.

Lorsque l'unité de commande déportée 90 est mise sous tension par l'opérateur, l'unité de commande déportée 90 vérifie que l'aéronef est à l'arrêt et, le cas échéant, commande l'alimentation de l'unité locale de commande 80 et y charge la table. L'unité de commande déportée 90 affiche alors un menu proposant la mise à jour des unités informatiques 100ᵢ et un choix de l'unité informatique 100ᵢ à mettre à jour. Au moyen du bouton 92, l'opérateur choisit par exemple de mettre à jour l'unité informatique 100₂ et branche sur le premier connecteur 10 une unité informatique 200.

L'unité de commande déportée 90 envoie alors à l'unité locale de commande 80 une instruction de liaison de l'unité informatique 200 à l'unité informatique 100₂. L'unité locale de commande 80 retourne un accusé réception à l'unité de commande déportée 90 et commande les modules de sélection 40 et 50 pour relier le composant PHY du premier connecteur 10 au composant PHY du deuxième connecteur 20₂ conformément à ce qui figure dans la table qu'elle a en mémoire. La vitesse de transfert est fixée à la valeur figurant dans la table ou, si l'unité informatique 100₂ ne peut communiquer à cette vitesse de transfert, une négociation est entamée pour déterminer une vitesse de transfert inférieure.

L'unité de commande déportée 90 peut en outre être mise en communication avec l'unité informatique 200 si elle envoie l'instruction correspondante à l'unité locale de commande 80.

Une voie montante et une voie descendante sont établies entre les composants PHY du premier connecteur 10 et du deuxième connecteur 20₂ à la vitesse de transfert mémorisée ou à la vitesse auto-négociée.

Le programme de l'unité informatique 200 commande alors la transmission des données de mise à jour.

Les chemins des données ont été mis en trait gras sur la figure 2.

A la fin de la mise à jour de l'unité informatique 100₂, l'opérateur indique à l'unité de commande déportée 90, au moyen de l'interface homme-machine, soit l'arrêt de la mise à jour, soit le choix d'une nouvelle unité informatique 100ᵢ.

On notera que le dispositif de chargement n'a pas à inspecter les messages pour les router.

On notera également qu'aucune liaison physique n'est établie entre les deuxièmes connecteurs 20ᵢ.

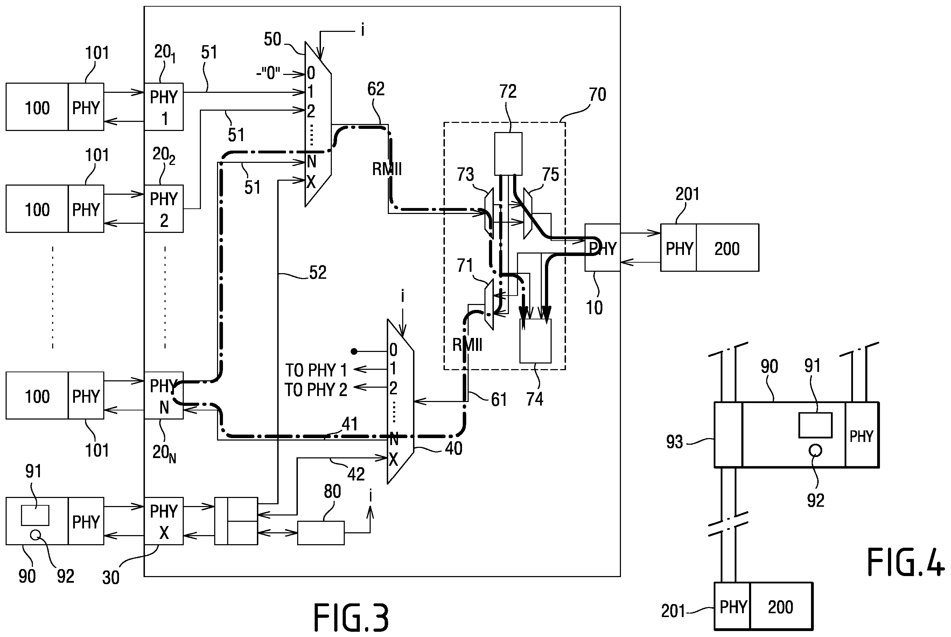

Une opération de test du dispositif de chargement 1 va maintenant être décrite en relation avec la figure 3.

A sa mise en route, l'unité locale de commande 80 commande l'exécution d'une procédure de test. Cette procédure vise à tester le bon fonctionnement des liaisons entre le premier connecteur 10 et les deuxièmes connecteurs 20ᵢ. Cette procédure comprend deux phases, à savoir :
- vérification des liaisons entre le module de test 80 et chacun des deuxièmes connecteurs 20ᵢ dans le sens montant et dans le sens descendant ;
- vérification des liaisons entre le module de test 80 et le premier connecteur 10 dans le sens montant et dans le sens descendant.

La vérification de la liaison entre le module de test 80 et chacun des deuxièmes connecteurs 20ᵢ comprend les étapes de :
- commander les modules de sélection 40,50 en vue de relier le module de test 70 à l'un des deuxièmes connecteurs 20ᵢ (l'unité locale de commande 80 sélectionne la sortie N sur le module de sélection 40 et l'entrée N sur le module de sélection 50 pour relier le deuxième connecteur 20_{N} sur la figure 3) ;
- commander le composant PHY du deuxième connecteur 20_{N} pour former une boucle à l'intérieur du dispositif de chargement 1 ;
- faire émettre un signal par le générateur de signal 72 (le trajet du signal en boucle depuis le module de test 70 jusqu'au deuxième connecteur 20_{N} est représenté en gras sur la figure 3) ;
- vérifier dans l'analyseur de signal 74 qu'un signal correspondant au signal émis est reçu dans un délai nominal et émettre une alerte si ce n'est pas le cas.

Ces étapes sont recommencées pour chacun des deuxièmes connecteurs 20ᵢ.

La vérification des liaisons entre le module de test 80 et le premier connecteur 10 comprend les étapes de :
- commander les modules de sélection 40, 50 en vue d'empêcher un passage de signal vers les deuxièmes connecteurs 20ᵢ et le troisième connecteur 30 (l'unité locale de commande 80 sélectionne la sortie 0 sur le module de sélection 40 et l'entrée 0 sur le module de sélection 50) ;
- commander le composant PHY du premier connecteur 10 pour former une boucle à l'intérieur du dispositif de chargement 1 ;
- faire émettre un signal par le générateur de signal 72 (le trajet du signal en boucle depuis le module de test 70 jusqu'au premier connecteur 10 est représenté en gras sur la figure 3) ;
- vérifier dans l'analyseur de signal 74 qu'un signal correspondant au signal émis est reçu dans un délai nominal et émettre une alerte si ce n'est pas le cas.

A la figure 4, est représentée une variante de réalisation de l'unité de commande déportée 90.

Dans cette variante, l'unité de commande déportée 90 comprend un boîtier pourvu d'un connecteur 93 relié directement au premier connecteur 10 du dispositif de chargement 1.

L'unité informatique 200 n'est plus raccordée directement au premier connecteur 10 mais est raccordée au connecteur 93 de sorte que l'unité informatique 200 est reliée au premier connecteur 10 via le connecteur 93 de l'unité de commande déportée 90.

Il est prévu avantageusement un dispositif permettant de s'assurer que plusieurs composants PHY des deuxièmes connecteurs ne puissent être dans leur état d'activation simultanément.

Selon une première possibilité, l'unité locale de commande 80 est agencée pour détecter l'état des composants PHY des deuxièmes connecteurs 20ᵢ et n'autoriser l'activation de l'un de ceux-ci que lorsque les composants PHY des autres deuxièmes connecteurs 20ᵢ sont dans leur état d'inactivation.

Selon une deuxième possibilité, l'unité locale de commande 80 est agencée pour détecter l'état des composants PHY des deuxièmes connecteurs 20ᵢ et de désactiver tous les composants PHY actifs des deuxièmes connecteurs 20ᵢ si plusieurs de ceux-ci sont détectés dans leur état d'activation.

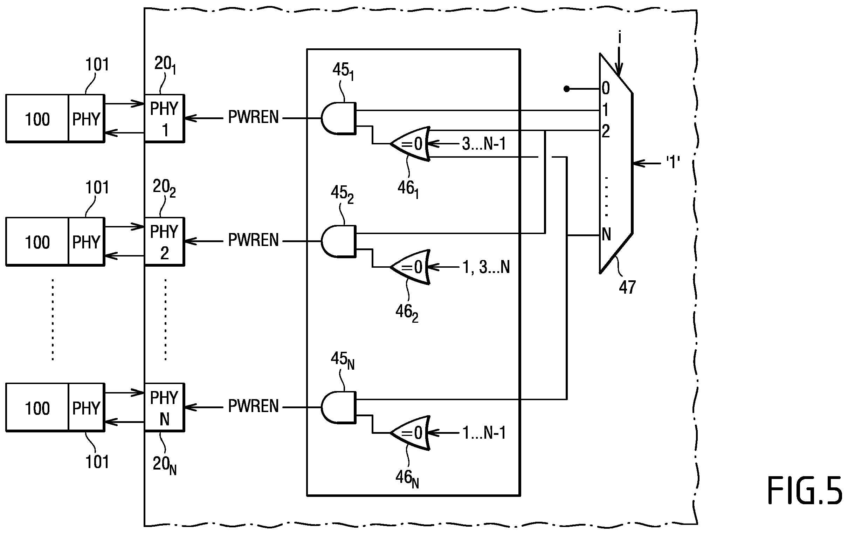

Sur la figure 5, on voit que le composant PHY de chaque deuxième connecteur 20ᵢ est activé par un signal PWREN provenant d'une cellule ET 45ᵢ dont une première entrée est reliée à une sortie d'un organe 47 (ladite sortie correspondant au deuxième connecteur 20ᵢ en question) et une deuxième entrée est reliée à une cellule OU 46ᵢ (ou NOR) ayant des entrées reliées aux sorties de l'organe 47 (lesdites sorties correspondant aux autres deuxièmes connecteurs 20ᵢ que le deuxième connecteur 20ᵢ en question). L'organe 47 a en outre une entrée à 1 et une entrée de sélection i.

Ainsi, un composant PHY d'un deuxième connecteur 20ᵢ ne peut être dans son état activé que si aucun autre des deuxièmes connecteurs n'a son composant PHY activé.

Bien entendu, l'invention n'est pas limitée au mode de réalisation décrit mais englobe toute variante entrant dans le champ de l'invention telle que définie par les revendications.

En particulier, la structure du dispositif de chargement peut être différente de celle décrite. Ainsi :
- le nombre de deuxièmes connecteurs peut être différent ;
- l'unité de commande déportée peut ne pas comprendre de connecteur 93 ou l'unité de commande déportée peut être agencée pour coopérer avec des sources de données de type carte à circuit intégré ;
- l'unité de commande déportée et l'unité locale de commande peuvent communiquer via un autre protocole de communication ;

Le dispositif de chargement peut comprendre, ou non, la fonction supplémentaire de sécurité visant à rendre les composants PHY inactifs quand deux composants PHY sont simultanément détectés dans leur état actif. L'unité de commande peut être agencée, ou non, pour détecter l'état des composants PHY des deuxièmes connecteurs et pour émettre une alerte si elle détecte que deux composants PHY des deuxièmes connecteurs sont simultanément actifs. Cette alerte peut par exemple aboutir à l'inactivation d'au moins l'un desdits composants PHY ou des deux, à la mémorisation d'un défaut dans un journal des défaillances, à l'arrêt des opérations de chargement dans l'attente d'une intervention humaine...

## Revendications

1. Dispositif (1) de chargement de données dans des unités informatiques de traitement (100ᵢ) depuis une source de données (200), comprenant au moins un premier connecteur (10) destiné à être relié à la source de données (200) et pourvu d'un composant PHY, et une pluralité de deuxièmes connecteurs (20ᵢ) destinés à être reliés aux unités informatiques de traitement (100ᵢ) et pourvus chacun d'un composant PHY, le premier connecteur (10) étant relié aux deuxièmes connecteurs (20ᵢ) par un premier module de sélection (40) pour définir une voie descendante unique de manière à transmettre des données depuis le premier connecteur (10) à chacun des deuxièmes connecteurs (20ᵢ) alternativement et par un deuxième module de sélection (50) pour définir une voie montante unique de manière à transmettre des données en sens inverse, les modules de sélection (40, 50) étant agencés pour ne pouvoir relier simultanément au premier connecteur (10) qu'un seul des deuxièmes connecteurs (20ᵢ) et le dispositif comprenant une unité de commande (80) des modules de sélection pour sélectionner le deuxième connecteur (20ᵢ) à relier au premier connecteur (10) en fonction de l'identifiant du composant PHY auquel est relié chaque connecteur, le dispositif comprenant un châssis sur lequel sont montés les modules de sélection (40, 50), le premier connecteur (10), et les deuxièmes connecteurs (20ᵢ) ; l'unité de commande comprenant une unité locale de commande (80) et une unité de commande déportée (90) reliée à l'unité locale de commande (80) via un troisième connecteur (30) du dispositif de chargement (1) et pourvue d'une interface homme-machine (91, 92) ;
le dispositif comprenant un module de test (70) des liaisons entre le premier connecteur (10) et les deuxièmes connecteurs (20ᵢ),
**caractérisé en ce que**:
le module de test (70) comprend : un multiplexeur (71) ayant une sortie reliée à une entrée du premier module de sélection, une première entrée reliée au premier connecteur (10) et une deuxième entrée reliée à un générateur de signal (72) ; un démultiplexeur (73) ayant une entrée reliée à une sortie du deuxième module de sélection, une première sortie reliée à un analyseur de signal (74) et une deuxième sortie reliée à une première entrée d'un multiplexeur (75) ayant une deuxième entrée reliée au générateur de signal (72) et une sortie reliée au premier connecteur (10), le premier connecteur (10) étant en outre relié par sa voie descendante à l'analyseur de signal (74) ; l'unité locale de commande (80) est agencée pour :
à sa mise en route, commander l'exécution d'une procédure de test comprenant deux phases, à savoir :
une phase de vérification de la liaison entre le module de test (70) et chacun des deuxièmes connecteurs (20ᵢ) comprenant les étapes de :
- commander les modules de sélection (40,50) en vue de relier le module de test (70) à l'un des deuxièmes connecteurs (20ᵢ) ;
- commander le composant PHY du deuxième connecteur (20_{N}) pour former une boucle à l'intérieur du dispositif de chargement (1) ;
- faire émettre un signal par le générateur de signal (72) du module de test (70) ;
- vérifier dans l'analyseur de signal (74) qu'un signal correspondant au signal émis est reçu dans un délai nominal et émettre une alerte si ce n'est pas le cas.
ces étapes étant recommencées pour chacun des deuxièmes connecteurs 20ᵢ ;
une phase de vérification des liaisons entre le module de test (70) et le premier connecteur (10) qui comprend les étapes de :
- commander les modules de sélection (40, 50) en vue d'empêcher un passage de signal vers les deuxièmes connecteurs (20ᵢ) et le troisième connecteur (30) ;
- commander le composant PHY du premier connecteur (10) pour former une boucle à l'intérieur du dispositif de chargement (1) ;
- faire émettre un signal par le générateur de signal (72) ;
- vérifier dans l'analyseur de signal (74) qu'un signal correspondant au signal émis est reçu dans un délai nominal et émettre une alerte si ce n'est pas le cas.

2. Dispositif selon la revendication 1, dans lequel l'unité de commande déportée (90) comprend un boîtier pourvu d'un connecteur externe relié directement au premier connecteur (10) du dispositif de chargement pour relier la source de données (200) au premier connecteur (10) via le connecteur externe de l'unité de commande déportée (90).

3. Dispositif selon la revendication 1 ou la revendication 2, dans lequel l'unité déportée de commande (90) comprend une mémoire dans laquelle est stockée une table mettant en relation chaque deuxième connecteur (20ᵢ) avec au moins une caractéristique d'une unité informatique (100ᵢ) reliée au deuxième connecteur (20ᵢ).

4. Dispositif selon la revendication 3, dans lequel la caractéristique est une vitesse de transfert de données et la table est chargée dans une mémoire de l'unité locale de commande (80) qui est agencée pour commander, lors de l'établissement d'une voie montante et d'une voie descendante avec un des deuxièmes connecteurs (20ᵢ), au composant PHY de ce deuxième connecteur (20ᵢ) de fonctionner à la vitesse de transfert mémorisée ou à une vitesse auto-négociée.

5. Dispositif selon l'une quelconque des revendications 1 à 4, dans lequel l'unité de commande déportée (90) et l'unité locale de commande (80) sont programmées pour former respectivement une unité maître et une unité esclave.

6. Dispositif selon l'une quelconque des revendications 1 à 5, dans lequel l'unité de commande déportée (90) et l'unité locale de commande (80) sont programmées pour communiquer entre elles au moyen des protocoles IP et UDP, l'unité de commande déportée (90) et l'unité locale de commande (80) ayant des adresses IP et MAC statiques.

7. Dispositif selon l'une quelconque des revendications 1 à 6, dans lequel l'unité de commande déportée (90) est agencée pour couper une alimentation en énergie de l'unité locale de commande (80) dans au moins une condition particulière.

8. Dispositif selon l'une quelconque des revendications 1 à 7, dans lequel l'unité de commande déportée (90) et l'unité locale de commande (80) sont agencées de telle manière que l'unité locale de commande (80) ne puisse être alimentée en énergie lorsque l'unité de commande déportée (90) n'est pas alimentée.

9. Dispositif selon l'une quelconque des revendications précédentes, dans lequel l'unité de commande est agencée pour mettre dans un état inactif les composants PHY des deuxièmes connecteurs (20ᵢ) non reliés au premier connecteur (10) et pour ne pouvoir mettre dans un état actif que celui des deuxièmes connecteurs (20ᵢ) qui est relié au premier connecteur (10).

10. Dispositif selon l'une quelconque des revendications précédentes, dans lequel les modules de sélection (40, 50) sont formés sur un circuit FPGA dans lequel sont définis des bus compatibles avec le standard RMII pour relier les modules de sélection au premier connecteur.

## Patentansprüche

1. Ladevorrichtung (1) zum Laden von Daten aus einer Datenquelle (200) in Datenverarbeitungseinheiten (100ᵢ), umfassend zumindest einen ersten Verbinder (10), der dazu bestimmt ist, mit der Datenquelle (200) verbunden zu sein und der mit einer PHY-Komponente versehen ist, sowie eine Mehrzahl von zweiten Verbindern (20ᵢ), die dazu bestimmt sind, mit den Datenverarbeitungseinheiten (100ᵢ) verbunden zu sein und die jeweils mit einer PHY-Komponente versehen sind, wobei der erste Verbinder (10) mit den zweiten Verbindern (20ᵢ) verbunden ist, und zwar über ein erstes Auswahlmodul (40), das dazu dient, einen einzelnen Abwärtskanal derart zu definieren, dass Daten von dem ersten Verbinder (10) abwechselnd an jeden der zweiten Verbinder (20i) übertragen werden, sowie über ein zweites Auswahlmodul (50), das dazu dient, einen einzelnen Aufwärtskanal derart zu definieren, dass Daten in umgekehrter Richtung übertragen werden, wobei die Auswahlmodule (40, 50) derart ausgelegt sind, dass immer nur einer der zweiten Verbinder (20i) gleichzeitig mit dem ersten Verbinder (10) verbindbar ist, und wobei die Vorrichtung eine Steuereinheit (80) zur Steuerung der Auswahlmodule umfasst, welche dazu dient, in Abhängigkeit von der Kennung der PHY-Komponente, mit welcher ein jeder der Verbinder verbunden ist, den mit dem ersten Verbinder (10) zu verbindenden zweiten Verbinder (20i) auszuwählen, wobei die Vorrichtung einen Rahmen umfasst, auf welchem die Auswahlmodule (40, 50), der erste Verbinder (10) und die zweiten Verbinder (20ᵢ) angebracht sind; wobei die Steuereinheit eine lokale Steuereinheit (80) und eine ausgelagerte Steuereinheit (90) umfasst, die über einen dritten Verbinder (30) der Ladevorrichtung (1) mit der lokalen Steuereinheit (80) verbunden ist und die mit einer Mensch-Maschine-Schnittstelle (91, 92) versehen ist; wobei die Vorrichtung ein Testmodul (70) zur Überprüfung der Verbindungen zwischen dem ersten Verbinder (10) und den zweiten Verbindern (20ᵢ) umfasst,
**dadurch gekennzeichnet, dass**
das Testmodul (70) umfasst: einen Multiplexer (71), welcher aufweist: einen mit einem Eingang des ersten Auswahlmoduls verbundenen Ausgang, einen mit dem ersten Verbinder (10) verbundenen ersten Eingang, und einen mit einem Signalgenerator (72) verbundenen zweiten Eingang; einen Demultiplexer (73), welcher aufweist: einen mit einem Ausgang des zweiten Auswahlmoduls verbundenen Eingang, einen mit einem Signalanalysator (74) verbundenen ersten Ausgang, und einen zweiten Ausgang, der mit einem ersten Eingang eines Multiplexers (75) verbunden ist, welcher einen mit dem Signalgenerator (72) verbundenen zweiten Eingang sowie einen mit dem ersten Verbinder (10) verbundenen Ausgang aufweist, wobei der erste Verbinder (10) ferner über seinen Abwärtskanal mit dem Signalanalysator (74) verbunden ist; wobei die lokale Steuereinheit (80) derart ausgelegt ist, dass sie:
beim Starten die Durchführung eines Testverfahrens veranlasst, das zwei Phasen umfasst, nämlich:
eine Verifizierungsphase, in welcher die Verbindung zwischen dem Testmodul (70) und einem jeden der zweiten Verbinder (20i) überprüft wird und welche die Schritte umfasst, dass:
- die Auswahlmodule (40, 50) derart angesteuert werden, dass das Testmodul (70) mit einem der zweiten Verbinder (20ᵢ) verbunden wird;
- die PHY-Komponente des zweiten Verbinders (20_{N}) derart angesteuert wird, dass innerhalb der Ladevorrichtung (1) eine Schleife gebildet wird;
- der Signalgenerator (72) des Testmoduls (70) dazu veranlasst wird, ein Signal auszusenden;
- in dem Signalanalysator (74) überprüft wird, dass ein dem Sendesignal entsprechendes Signal innerhalb eines nominellen Zeitabschnitts empfangen wird, und dass eine Warnmeldung ausgeben wird, wenn dies nicht der Fall ist;
wobei diese Schritte für einen jeden der zweiten Verbinder (20ᵢ) wiederholt werden;
eine Verifizierungsphase, in welcher die Verbindungen zwischen dem Testmodul (70) und dem ersten Verbinder (10) überprüft werden und welche die Schritte umfasst, dass:
- die Auswahlmodule (40, 50) derart angesteuert werden, dass ein Signaldurchgang zu den zweiten Verbindern (20ᵢ) und dem dritten Verbinder (30) verhindert wird;
- die PHY-Komponente des ersten Verbinders (10) derart angesteuert wird, dass innerhalb der Ladevorrichtung (1) eine Schleife gebildet wird;
- der Signalgenerator (72) dazu veranlasst wird, ein Signal auszusenden;
- in dem Signalanalysator (74) überprüft wird, dass ein dem Sendesignal entsprechendes Signal innerhalb eines nominellen Zeitabschnitts empfangen wird, und dass eine Warnmeldung ausgeben wird, wenn dies nicht der Fall ist;

2. Vorrichtung nach Anspruch 1, wobei die ausgelagerte Steuereinheit (90) ein Gehäuse umfasst, das mit einem externen Verbinder versehen ist, der direkt mit dem ersten Verbinder (10) der Ladevorrichtung verbunden ist, um über den externen Verbinder der ausgelagerten Steuereinheit (90) die Datenquelle (200) mit dem ersten Verbinder (10) zu verbinden.

3. Vorrichtung nach Anspruch 1 oder nach Anspruch 2, wobei die ausgelagerte Steuereinheit (90) einen Speicher umfasst, in welchem eine Tabelle abgespeichert ist, die jeden zweiten Verbinder (20i) mit zumindest einem Merkmal einer mit dem zweiten Verbinder (20ᵢ) verbundenen Datenverarbeitungseinheit (100i) in Beziehung setzt.

4. Vorrichtung nach Anspruch 3, wobei es sich bei dem Merkmal um eine Datenübertragungsgeschwindigkeit handelt, und die Tabelle in einem Speicher der lokalen Steuereinheit (80) geladen ist, die dafür ausgelegt ist, beim Aufbau eines Aufwärts- und eines Abwärtskanals mit einem der zweiten Verbinder (20ᵢ) die PHY-Komponente jenes zweiten Verbinders (20ᵢ) dazu zu veranlassen, mit der gespeicherten Übertragungsgeschwindigkeit oder mit einer automatisch ausgehandelten Geschwindigkeit zu arbeiten.

5. Vorrichtung nach einem der Ansprüche 1 bis 4, wobei die ausgelagerte Steuereinheit (90) und die lokale Steuereinheit (80) jeweils zur Bildung einer Master-Einheit und einer Slave-Einheit programmiert sind.

6. Vorrichtung nach einem der Ansprüche 1 bis 5, wobei die ausgelagerte Steuereinheit (90) und die lokale Steuereinheit (80) dafür programmiert sind, über das IP-Protokoll und das UDP-Protokoll miteinander zu kommunizieren, wobei die ausgelagerte Steuereinheit (90) und die lokale Steuereinheit (80) jeweils über eine statische IP-Adresse und eine statische MAC-Adresse verfügen.

7. Vorrichtung nach einem der Ansprüche 1 bis 6, wobei die ausgelagerte Steuereinheit (90) dafür ausgelegt ist, unter zumindest einer besonderen Bedingung eine Energieversorgung der lokalen Steuereinheit (80) zu unterbrechen.

8. Vorrichtung nach einem der Ansprüche 1 bis 7, wobei die ausgelagerte Steuereinheit (90) und die lokale Steuereinheit (80) derart ausgelegt sind, dass die lokale Steuereinheit (80) nicht mit Energie versorgbar ist, wenn die ausgelagerte Steuereinheit (90) nicht gespeist wird.

9. Vorrichtung nach einem der vorhergehenden Ansprüche, wobei die Steuereinheit dafür ausgelegt ist, die PHY-Komponenten der nicht mit dem ersten Verbinder (10) verbundenen zweiten Verbinder (20ᵢ) in einen inaktiven Zustand zu versetzen und nur jenen der zweiten Verbinder (20ᵢ) in einen aktiven Zustand zu versetzen, der mit dem ersten Verbinder (10) verbunden ist.

10. Vorrichtung nach einem der vorhergehenden Ansprüche, wobei die Auswahlmodule (40, 50) auf einer FPGA-Schaltung gebildet sind, in welcher mit dem RMII-Standard kompatible Busse definiert sind, die dazu dienen, die Auswahlmodule mit dem ersten Verbinder zu verbinden.

## Claims

1. Device (1) for loading data into computer processing units (100ᵢ) from a data source (200), comprising at least one first connector (10) that is intended to be connected to the data source (200) and that is provided with a PHY component, and a plurality of second connectors (20ᵢ) that are intended to be connected to the computer processing units (100ᵢ) and that are each provided with a PHY component, the first connector (10) being connected to the second connectors (20ᵢ) by a first selection module (40) in order to define a single downlink channel so as to transmit data from the first connector (10) to each of the second connectors (20ᵢ) alternately and by a second selection module (50) in order to define a single uplink channel so as to transmit data in the opposite direction, the selection modules (40, 50) being configured to only be able to simultaneously connect one of the second connectors (20ᵢ) to the first connector (10) and the device comprising a control unit (80) for the selection modules in order to select the second connector (20ᵢ) to be connected to the first connector (10) depending on the identifier of the PHY component to which each connector is connected, the device comprising a frame on which the selection modules (40, 50), the first connector (10), and the second connectors (20ᵢ) are mounted; the control unit comprising a local control unit (80) and a remote control unit (90) that is connected to the local control unit (80) via a third connector (30) of the loading device (1) and that is provided with a human-machine interface (91, 92); the device comprising a test module (70) for the connections between the first connector (10) and the second connectors (20ᵢ),
**characterised in that**:
the test module (70) comprises: a multiplexer (71) having an output that is connected to an input of the first selection module, a first input that is connected to the first connector (10) and a second input that is connected to a signal generator (72); a demultiplexer (73) having an input that is connected to an output of the second selection module, a first output that is connected to a signal analyser (74) and a second output that is connected to a first input of a multiplexer (75) having a second input that is connected to the signal generator (72) and an output that is connected to the first connector (10), the first connector (10) also being connected via the downlink channel thereof to the signal analyser (74); the local control unit (80) is configured:
upon start-up, to control the execution of a test procedure comprising two phases, namely:
a verification phase for the connection between the test module (70) and each of the second connectors (20ᵢ), comprising the steps of:
- controlling the selection modules (40, 50) with a view to connecting the test module (70) to one of the second connectors (20ᵢ);
- controlling the PHY component of the second connector (20_{N}) so as to form a loop inside the loading device (1);
- causing the signal generator (72) of the test module (70) to emit a signal;
- verifying in the signal analyser (74) that a signal corresponding to the emitted signal is received within a nominal delay time and issuing an alert if this is not the case, these steps being restarted for each of the second connectors 20ᵢ;
a verification phase for the connections between the test module (70) and the first connector (10), which comprises the steps of:
- controlling the selection modules (40, 50) with a view to preventing a signal from passing to the second connectors (20ᵢ) and the third connector (30);
- controlling the PHY component of the first connector (10) so as to form a loop inside the loading device (1);
- causing the signal generator (72) to emit a signal;
- verifying in the signal analyser (74) that a signal corresponding to the emitted signal is received within a nominal delay time and issuing an alert if this is not the case.

2. Device according to claim 1, wherein the remote control unit (90) comprises a housing that is provided with an external connector that is directly connected to the first connector (10) of the loading device in order to connect the data source (200) to the first connector (10) via the external connector of the remote control unit (90).

3. Device according to claim 1 or claim 2, wherein the remote control unit (90) comprises a memory in which a table is stored which links each second connector (20ᵢ) to at least one characteristic of a computer unit (100ᵢ) that is connected to the second connector (20ᵢ).

4. Device according to claim 3, wherein the characteristic is a data transfer speed and the table is loaded into a memory of the local conrol unit (80), which is configured, when an uplink channel and a downlink channel to one of the second connectors (20ᵢ) is established, to control the PHY component of said second connector (20i) to operate at the stored transfer speed or at an autonegotiated speed.

5. Device according to any of claims 1 to 4, wherein the remote control unit (90) and the local control unit (80) are programmed to form a master unit and a slave unit, respectively.

6. Device according to any of claims 1 to 5, wherein the remote control unit (90) and the local control unit (80) are programmed to communicate with one another using IP and UDP protocols, the remote control unit (90) and the local control unit (80) having static IP and MAC addresses.

7. Device according to any of claims 1 to 6, wherein the remote control unit (90) is configured to cut off an energy supply of the local control unit (80) in at least one particular condition.

8. Device according to any of claims 1 to 7, wherein the remote control unit (90) and the local control unit (80) are configured such that the local control unit (80) cannot be supplied with energy when the remote control unit (90) is not being supplied.

9. Device according to any of the preceding claims, wherein the control unit is configured to put the PHY components of the second connectors (20ᵢ) not connected to the first connector (10) in an inactive state and to only put the second connector (20ᵢ) that is connected to the first connector (10) in an active state.

10. Device according to any of the preceding claims, wherein the selection modules (40, 50) are formed on an FPGA circuit in which buses that are compatible with the RMII standard are defined in order to connect the selection modules to the first connector.
